# EUROPÄISCHE PATENTANMELDUNG

(11) **EP 2 161 115 A1**
(43) Veröffentlichungstag der Anmeldung: **10.03.2010**
(21) Anmeldenummer: 08015577.3
(22) Anmeldetag: 04.09.2008
(51) Int. Cl.: B29C 33/20, B29C 45/64

(54) **Spritzgießwerkzeug**

(71) Anmelder: ifw Manfred Otte GmbH, 4563 Micheldorf (AT)
(72) Erfinder: Kastner, Friedrich, Dl. Dr., 4710 Grieskirchen (AT); Demmel, Andreas, Ing., 4810 Gmunden (AT); Ebner, Josef, Ing., 4563 Micheldorf (AT); Bernögger, Thomas, Ing., 4591 Molln (AT)
(74) Vertreter: Landgraf, Elvira

(57) **Zusammenfassung**

Die Erfindung betrifft ein Spritzgießwerkzeug mit einem mehrteiligen Formkern, einer Zentriereinheit für den Formkern, Außenformteilen, einer Schließeinheit und gegebenenfalls mindestens einer Plastifiziereinheit, **dadurch gekennzeichnet, dass** das Spritzgießwerkzeug eine zusätzliche Verriegelungseinheit im Bereich des Formkerns und/oder der Formplatten aufweist.

## Beschreibung

Die Erfindung betrifft ein Spritzgießwerkzeug mit einer Schließvorrichtung, einer Zentriereinheit und einer zusätzlichen Verriegelungseinheit.

Aus DE 10 2006 041 136 ist eine Schließeinheit für eine Spritzgießmaschine, bekannt, mit einem in Seitenansicht C-förmigen Rahmen, an dessen Schenkeln sich einerseits eine feststehende Formaufspannplatte und andererseits eine Einrichtung zur Aufbringung der Schließkraft auf eine bewegliche Formaufspannplatte abstützen, wobei die Schenkel des C-Rahmens ausschließlich durch einen mittig verlaufenden Balken verbunden sind, über den die Formaufspannplatten beidseits vorstehen, wobei die bewegliche Formaufspannplatte lediglich auf dem Balken verfahrbar ist.

Aus DE 101 42 041 A ist eine Spritzgießmaschine bekannt, mit einer durch einen Elektromotor mittels einer Schließeinrichtung bewegbaren Formaufspannplatte, mit einem Schutzgitter mit Türe, deren Öffnung durch Betätigung mindestens eines Sicherheitsschalters die Energieversorgung des Elektromotors unterbricht und mit einer Bremseinrichtung, wobei die Bremseinrichtung (10) zwischen dem Elektromotor und der Schließeinrichtung angeordnet und mit einer Überwachungseinrichtung versehen ist

Aus AT 406 465 B ist eine Spritzgießmaschine mit einer Schließvorrichtung zum Schließen von Formhälften und mit einer Einspritzeinheit zum Plastifizieren und Einspritzen des Kunststoffes in die Form bekannt. Die Spritzgießmaschine ist für die Ausführung der linearen Schließ- und Einspritzbewegung mit je einem Kreuzschleifenkurbelgetriebe ausgerüstet. Dieses Getriebe weist zwei sich gegenläufig drehende als Kurbelscheiben ausgebildete Kurbeln auf, die mittels Elektromotoren antreibbar sind und deren kraftübertragende Kurbelzapfen in einer Ebene liegen.

Bei all diesen Schließ- und Verriegelungsvorrichtungen kann von außen aufgrund konstruktiver Merkmale nicht genug Kraft in eine Spritzgussform eingeleitet werden um z.B. Kerne in der Form zu zentrieren oder Formplatten sicher zu verriegeln.

Aufgabe der Erfindung ist es durch möglichst kleine Verriegelungseinheiten z.B. in Kombination mit Zentrier- und Schließeinheiten im Werkzeug zusätzlich Haltekräfte für die Zentrierung des Formkerns aufzubauen.

Gegenstand der Erfindung ist daher ein Spritzgießwerkzeug mit einem mehrteiligen Formkern, einer oder mehreren Zentriereinheit(en) für den Formkern, Außenformteilen und einer Schließeinheit, dadurch gekennzeichnet, dass das Spritzgießwerkzeug eine zusätzliche Verriegelungseinheit im Bereich des Formkerns und/oder der Formplatten aufweist.

Die Verriegelung kann durch mechanische, elektrische (Elektromagnet), hydraulische Einrichtungen, durch Druckluft, Vakuum oder thermische Aktuatoren erfolgen.

Vorzugsweise wird die Verrieglungseinheit mit einer Zentriereinheit für den Formkern kombiniert. Dadurch werden zusätzliche Verbindungskräfte im Spritzgießwerkzeug bereitgestellt.

In einer Ausführungsform können Zentriereinheiten mit einem Bajonettverschluss, mit Gewinde, Kugeln, Zapfen oder Bolzen versehen werden. Durch eine Drehung um wenige Grade kann so ein Kraftschluss zwischen den Kernteilen im Werkzeug hergestellt werden. Dadurch können Kräfte durch das eingespritzte Polymer, welche üblicherweise zur Verschiebung der Kerne führen können, besser in die Kernlager abgeleitet werden.

Die Betätigung des Bajonettverschlusses, bzw. der anderen genannten Schließvorrichtungen kann mechanisch, hydraulisch elektrisch, pneumatisch oder elektromagnetisch oder durch Druckluft erfolgen.

In einer weiteren, besonders platzsparenden und bevorzugten Variante ist die Zentriereinheit abgedichtet, z.B.: mit einer Dichtung in beliebiger Form, wie beispielsweise einem O-Ring, Dieser Ring kann aus Kunststoff, wie Teflon,oder Gummi oder auch aus einem Metall bestehen. Durch eine Leitung wird im geschlossenen Zustand Vakuum angelegt. Durch das angelegte Vakuum werden die Kerne zusätzlich zusammen gehalten, der Außendruck bewirkt, dass die Komponenten des Werkzeugs zusammengepresst werden und die Kernkomponenten und die Formteile zusammengehalten werden.

Dies kann beispielsweise durch eine Vakuumpumpe, wie beispielsweise Drehschieber, Rootspumpen, mechanische Pumpen oder Membranpumpen erfolgen, wobei das Vakuum während des gesamten Füllvorgangs oder nur bis zur Einspritzung des Kunststoffs und während der Nachdruckzeit angelegt werden kann. Dann erfolgt die Fixierung des aus mehreren Teilen bestehenden Kerns durch das eingespritzte Kunststoffmaterial.

Die Erzeugung des Vakuums kann nicht nur durch externe Pumpen erfolgen sondern auch durch eine in das Werkzeug integrierte Vakuumeinheit, z.B.: einen Kolben. Während des Schließvorgangs der Form fährt der Kolben in seiner Führung zurück und erzeugt dabei ein Vakuum.

Die Steuerung und das Anlegen des Vakuums kann über die Maschinensteuerung erfolgen oder durch eine am Werkzeug montierte Schaltvorrichtung So kann beispielsweise auch in der Kulisse eine mechanische Schaltvorrichtung montiert werden, die bei Schließen des Werkzeugs das Anlegen des Vakuums auslöst.

Durch einen zweiten Vakuumkreis kann ferner die Entlüftung der Form begünstigt werden, da das eingespritzte Kunststoffmaterial nicht zuerst die in der Form eingeschlossene Luft verdrängen muss.

Bei der Herstellung von Spritzgussformen mit Abzweigern kann das Vakuum sowohl im Bereich des Stammkerns als auch im Bereich des der Anliegefläche des Seitenkerns angelegt werden.

Das Vakuumsystem kann auch verwendet werden um beim Öffnen und Auswerfen Druckluft einzublasen und so die Entformung zu erleichtern und zu beschleunigen.

In einer weiteren Ausführungsform kann die Verriegelungseinheit auch in Form einer abgewandelten Spreizkernkonstruktion ausgeführt werden. Der Antrieb der mechanischen Teile kann außen oder in der Kernmitte liegen, wobei der Antrieb entweder getrennt vorgesehen sein kann oder mit der Kernbewegung gekoppelt sein kann.

Der Hub, der durch die Werkzeugbewegung vorhanden ist, kann zur Verriegelung genutzt werden, es kann die Verriegelung aber auch mechanisch erfolgen. Es kann beispielsweise durch Betätigung des Spreizkerns die Verriegelung ausgelöst werden.

Ferner können U-förmige Segmente zur Verriegelung zusammengezogen werden, wobei dieser Antrieb wiederum entweder getrennt oder über die Maschinensteuerung erfolgen kann.
Die U-förmigen Segmente sind vorzugsweise als Klammern ausgebildet.

Die Steuerung der zusätzlichen Zentriereinheit kann auch durch thermische Aktuatoren erfolgen. Dabei wird durch die Wärmedehnung beim Aufheizen oder Kühlen beispielsweise als Zentriereinheit vorgesehene Bolzen aus ihrem Lager herausgedrückt und in entsprechend vorgesehene Ausnehmungen einrasten., oder auch durch unterschiedliche Wärmeausdehnung der Materialien von Bolzen und Ausnehmungen fixiert werden. Dadurch wird die Form zusätzlich verriegelt und zentriert.

Es können auch unterschiedliche Ausführungen der Zentrier- und Verriegelungseinheiten kombiniert werden. So kann beispielsweise ein Bajonettverschluss mit einer Vakuumverriegelung kombiniert werden.
Weiters kann durch eine z.B. raue Oberfläche der Zentriereinheit auch verhindert werden, dass die Kerne gegeneinander verdrehen.

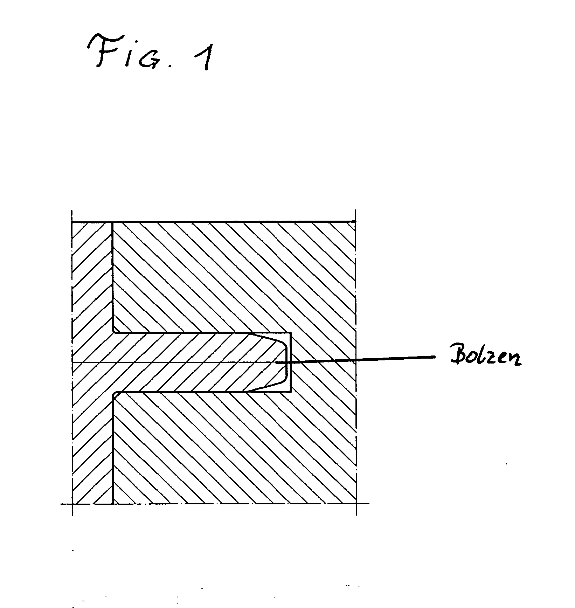

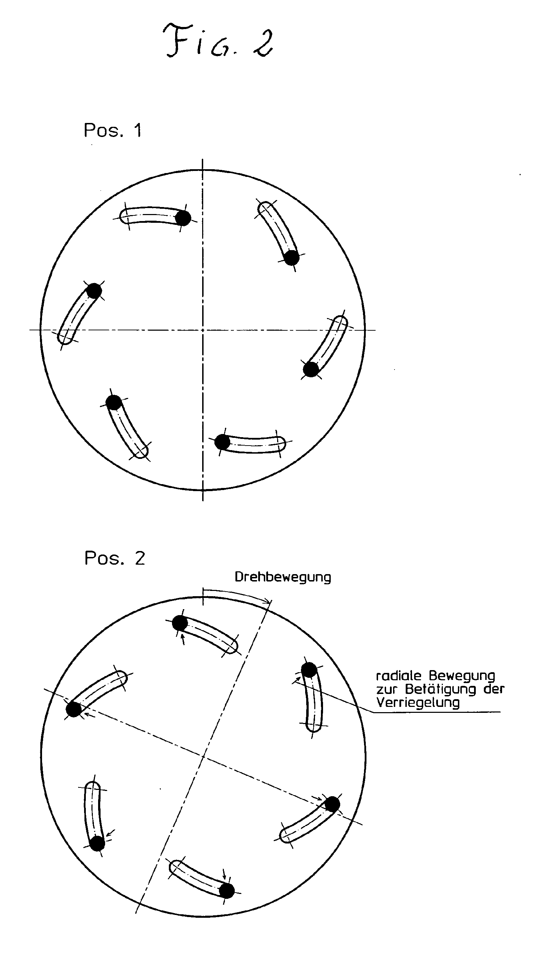

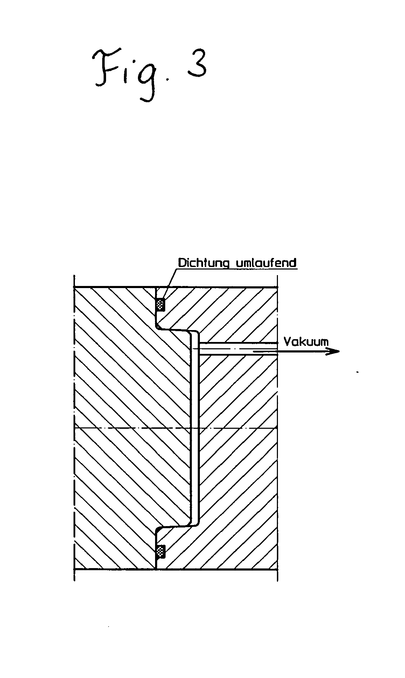

In den Figuren 1 bis 3 sind exemplarisch Ausführungsformen der erfindungsgemäßen Zentrier- und Verriegelungseinheiten dargestellt.

In Fig 1 ist die Verriegelung durch einen Bolzen dargestellt. Dabei wird der Bolzen zur Verriegelung beheizt, zum Öffnen der Verriegelung wird er kurzzeitig gekühlt.

In Fig. 2 ist die Verriegelung durch einen Bajonettverschluss dargestellt, wobei die Verriegelung bzw. Entriegelung jeweils durch eine radiale Drehbewegung erfolgt.

In Fig. 3 ist die Zentrierung bzw. Verriegelung durch Anlegen eines Vakuums dargestellt.

## Patentansprüche

1. Spritzgießwerkzeug mit einem mehrteiligen Formkern, einer Zentriereinheit für den Formkern, Außenformteilen, einer Schließeinheit und gegebenenfalls mindestens einer Plastifiziereinheit, **dadurch gekennzeichnet, dass** das Spritzgießwerkzeug eine zusätzliche Verriegelungseinheit im Bereich des Formkerns und/oder der Formplatten aufweist.

2. Spritzgießwerkzeug nach Anspruch 1, **dadurch gekennzeichnet, dass** die Verriegelung mechanisch, elektrisch, hydraulisch, pneumatisch, elektromagnetisch, durch thermische Aktuatoren, Vakuum oder Druckluft erfolgt.

3. Spritzgießwerkzeug nach einem der Ansprüche 1 oder 2, **dadurch gekennzeichnet, dass** die Verriegelungseinheit mit einer Zentriereinheit kombiniert ist.

4. Spritzgießwerkzeug nach einem der Ansprüche 1 bis 3, **dadurch gekennzeichnet, dass** die Verriegelungseinheit durch einen Bajonettverschluss, durch Gewinde, Kugeln, Zapfen oder Bolzen, U-förmige Segmente oder durch Vakuumeinrichtungen realisiert wird.

5. Spritzgießwerkzeug nach einen der Ansprüche 1 bis 4, **dadurch gekennzeichnet, dass** ein zweiter Vakuumkreis vorgesehen ist, durch den eine Entlüftung der Kavität erfolgt.
